# EUROPÄISCHE PATENTANMELDUNG

(11) **EP 1 137 144 A1**
(43) Veröffentlichungstag der Anmeldung: **26.09.2001**
(21) Anmeldenummer: 00106117.5
(22) Anmeldetag: 21.03.2000
(51) Int. Cl.: H02H 9/04

(54) **Vorrichtung zur Verbindung einer mehrere Phasenleiter und einen Neutralleiter aufweisenden mehrphasigen Wechselstromversorgung mit einer elektrischen Verbraucheranordung**

(71) Anmelder: Electro-Terminal GmbH, 6022 Innsbruck (AT)
(72) Erfinder: Fehle, Gerhard, 6022 Innsbruck (AT); Kreuzbichler, Jürgen, 6022 Innsbruck (AT); Abenthung, Hannes, 6022 Innsbruck (AT)
(74) Vertreter: Rupp, Christian, Dipl.Phys.

(57) **Zusammenfassung**

Es wird eine Vorrichtung zur Verbindung einer mehrere Phasenleiter (L1, L2, L3) und einen Neutralleiter (N) aufweisenden mehrphasigen Wechselstromversorgung mit einer elektrischen Verbraucheranordnung vorgeschlagen, umfassend ein Verbindermodul (12) mit einem Gehäuse (30) und mehreren von dem Gehäuse (30) aufgenommenen, zur Verbindung mit je einem der Leiter (L1, L2, L3, N) der Wechselstromversorgung bestimmten Kontaktelementen (20). Erfindungsgemäß ist das Verbindermodul (12) mit einer Verpolungsschutzanordnung (40) zu einer Baueinheit vormontiert oder vormontierbar. Die Verpolungsschutzanordnung (40) weist mehrere Verpolungsschutzelemente (26) auf, welche zumindest zwischen jedes Paar eines einem der Phasenleiter (L1, L2, L3) zugeordneten Kontaktelements und des dem Neutralleiter (N) zugeordneten Kontaktelements (20) geschaltet sind und bei einer kleineren zwischen den Kontaktelementen (20) des jeweiligen Paars liegenden Spannung eine höherohmige Verbindung und bei einer größeren Spannung eine niederohmigere Verbindung zwischen diesem Kontaktelementenpaar (20) bilden. Die Verpolungsschutzanordnung (40) verhindert Schäden an der Verbraucheranordnung, die durch einen versehentlichen Falschanschluß der Leiter der Wechselstromversorgung an das Verbindermodul (12) entstehen können.

## Beschreibung

Die Erfindung befaßt sich mit dem Anschluß einer elektrischen Verbraucheranordnung an eine mehrere Phasenleiter und einen Neutralleiter aufweisende mehrphasige Wechselstromversorgung.

Wenn technisch unversierte Personen elektrische Verbraucher an eine mehrphasige Wechselstromversorgung anschließen, sind Falschpolungen nicht auszuschließen. Bei elektrischen Herden beispielsweise wird es üblicherweise den in der Regel nicht ausreichend geschulten Käufern überlassen, selbst für den Anschluß des Herds an das häusliche Drehstromnetz zu sorgen. Es kann dann vorkommen, daß der Heimwerker aus Versehen und ohne diese zu bemerken einen der Phasenleiter des Drehstromnetzes dort am Herd anschließt, wo eigentlich der Neutralleiter angeschlossen werden sollte. Dies kann dazu führen, daß Teile des Herds unbeabsichtigt zwischen zwei Phasenleitern statt zwischen einem Phasenleiter und dem Neutralleiter liegen. Im Fall einer Sternschaltung der Herdelektrik liegt dann an diesen Teilen des Herds statt der niedrigeren Strangspannung des Drehstromnetzes von beispielsweise etwa 230 V die deutlich höhere Außenleiterspannung von beispielsweise etwa 400 V an. Sofern die betreffenden Herdteile nicht für eine derart hohe Betriebsspannung ausgelegt sind, können Beschädigungen der Herdelektrik die Folge sein.

Aufgabe der Erfindung ist es demnach, elektrische Verbraucher vor Beschädigungen zu schützen, die infolge eines falschpoligen Anschlusses der Leiter einer mehrphasigen Wechselstromversorgung auftreten können.

Bei der Lösung dieser Aufgabe geht die Erfindung aus von einer Vorrichtung zur Verbindung einer mehrere Phasenleiter und einen Neutralleiter aufweisenden mehrphasigen Wechselstromversorgung mit einer elektrischen Verbraucheranordnung, umfassend ein Verbindermodul mit einem Gehäuse und mehreren von dem Gehäuse aufgenommenen, zur Verbindung mit je einem der Leiter der Wechselstromversorgung bestimmten Kontaktelementen.

Erfindungsgemäß umfaßt diese Vorrichtung eine mit dem Verbindermodul zu einer Baueinheit vormontierte oder vormontierbare Verpolungsschutzanordnung mit mehreren Verpolungsschutzelementen, welche zumindest zwischen jedes Paar eines einem der Phasenleiter zugeordneten Kontaktelements und des dem Neu-tralleiter zugeordneten Kontaktelements geschaltet sind und bei einer kleineren zwischen den Kontaktelementen des jeweiligen Paars liegenden Spannung eine höherohmige Verbindung und bei einer größeren Spannung eine niederohmigere Verbindung zwischen diesem Kontaktelementenpaar bilden.

Bei der erfindungsgemäßen Lösung führen die Verpolungsschutzelemente zu niederohmigen "Kurzschluß"-Verbindungen zwischen den Kontaktelementen eines Paars, falls die zwischen diesem Paar liegende Spannung höher als eine für einen ordnungsgemäßen Betrieb der Verbraucheranordnung vorgesehene Betriebsspannung ist. Die Ansprechspannung, bei der der Stromfluß über die Verpolungsschutzelemente deutlich zuzunehmen beginnt, wird zweckmäßigerweise so gewählt sein, daß bei verpolungsbedingten Überspannungen an den Kontaktelementenpaaren dieser "Kurzschluß" zuverlässig herbeigeführt wird. Der "Kurzschluß" kann dabei ein echter, nahezu widerstandsloser sein, er kann aber auch ein hinreichend niederohmiger Zustand sein, bei dem die Verbraucheranordnung stromflußmäßig weitestgehend entkoppelt von der Wechselstromversorgung ist. Indem die Verpolungsschutzanordnung mit dem Verbindermodul zu einer Baueinheit vormontiert oder vormontierbar ist, kann eine universell für beliebige Verbraucheranordnungen einsetzbare Anschlußvorrichtung bereitgestellt werden, die unabhängig von der konkreten Verbraucheranordnung stets einen zuverlässigen Schutz gegen Verpolungen bietet. Spezielle Verpolungsschutzmaßnahmen an der Verbraucheranordnung müssen nicht getroffen werden.

Bevorzugt sind die Verpolungsschutzelemente von Varistoren, also spannungsabhängigen Widerständen, gebildet, wenngleich beispielsweise auch Schaltelemente prinzipiell denkbar sind, die im Normalfall offen sind und bei Überspannungen schließen.

Die Verpolungsschutzelemente können in dem Verbindergehäuse untergebracht und darin unlösbar mit den Kontaktelementen verbunden sein. Alternativ ist es denkbar, daß die Verpolungsschutzanordnung als ein von dem Verbindermodul gesondert hergestelltes Verpolungsschutzmodul ausgeführt ist, welches lösbar an dem Verbindermodul anbringbar ist, insbesondere mittels einer Steckverbindung. Dies ermöglicht es, handelsüblich erhältliche Verbindermodule mit der Verpolungsschutzanordnung nachzurüsten.

Die Erfindung wird im folgenden anhand der beigefügten Zeichnungen näher erläutert. Es stellen dar:
Fig. 1 einen Schaltplan eines mittels der erfindungsgemäßen Anschlußvorrichtung an ein Drehstromnetz angeschlossenen Drehstromverbrauchers,
Fig. 2 schematisch ein Ausführungsbeispiel eines Verbindermoduls mit ansteckbarem Verpolungsschutzmodul, und
Fig. 3 ein weiteres Ausführungsbeispiel, bei dem ein Verbindermodul mit ansteckbarem Verpolungsschutzmodul dargestellt ist, wobei das ansteckbare Verpolungsschutzmodul die Deckkontaktmimik des Verbindermoduls 1:1 für die gehäuseinterne Verbindung wiedergibt.

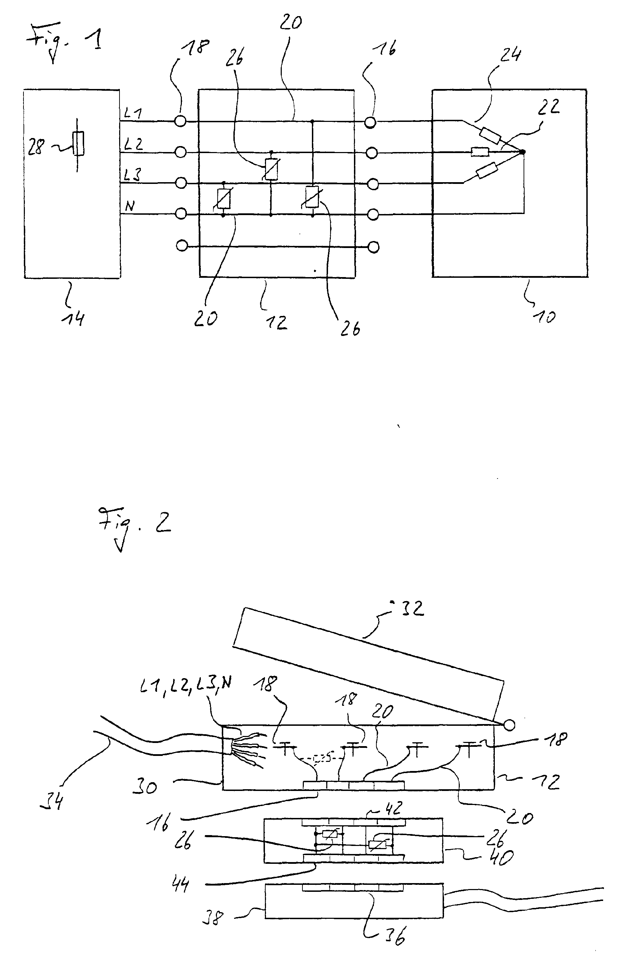

In Fig. 1 ist eine elektrische Drehstrom-Verbraucheranordnung 10, beispielsweise ein elektrischer Herd, in Sternschaltung über ein Verbindermodul 12 an ein Drehstromnetz 14 angeschlossen. Das Verbindermodul 12 weist eine Anordnung erster elektrischer Schnittstellenanschlüsse 16, beispielsweise in Form von Steckanschlüssen, auf, an denen die Verbraucheranordnung 10 anschließbar ist. Ferner weist es eine Anordnung zweiter elektrischer Schnittstellenanschlüsse 18, beispielsweise in Form von Anschlußklemmen, auf, an denen die mit L1, L2 und L3 bezeichneten Phasenleiter und der mit N bezeichnete Neutralleiter des Drehstromnetzes 14 anschließbar sind. Die ersten und die zweiten Schnittstellenanschlüsse 16, 18 sind innerhalb des Verbindermoduls 12 durch Kontaktelemente 20, beispielsweise in Form gestanzter und gebogener Blechstücke, miteinander verbunden.

In Fig. 1 wird die Verbraucheranordnung 10 ordnungsgemäß aus dem Drehstromnetz 14 gespeist. Es kann jedoch vorkommen, daß aus Versehen die Leiter des Drehstromnetzes 14 in falscher Reihenfolge an das Verbindermodul 12 angeschlossen werden. Daraus resultierende Verpolungen können elektrische und elek-tronische Bauteile der Verbraucheranordnung 10 unter Umständen beschädigen. Wenn beispielsweise der Phasenleiter L3 und der Neutralleiter N des Drehstromnetzes 14 versehentlich gegenseitig vertauscht an das Verbindermodul 12 angeschlossen werden, liegen Verbraucherzweige 22, 24 der Verbraucheranordnung 10 zwischen zwei Phasenleitern statt zwischen einem Phasenleiter und dem Neutralleiter. Dies bedeutet, daß diese Verbraucherzweige 22, 24 statt mit der Strangspannung des Drehstromnetzes 14 von beispielsweise etwa 230 V mit der bei Sternschaltung erheblich höheren Außenleiterspannung von beispielsweise etwa 400 V gespeist werden. Sind die in den Verbraucherzweigen 22, 24 liegenden Bauelemente nicht für eine derart hohe Betriebsspannung ausgelegt, können sie zerstört werden. Eine Rückwirkung auf das Drehstromnetz 14 wird dabei jedoch nicht festzustellen sein, da sämtliche auftretenden Spannungen und Ströme in einem Bereich liegen, der für das Drehstromnetz 14 zulässig ist.

Zur Vermeidung solcher Verpolungsschäden sind der Verbraucheranordnung 10 Varistoren 26 so vorgeschaltet, daß sie bei ordnungsgemäßem Anschluß der Phasenleiter L1, L2 und L3 und des Neutralleiters N an das Verbindermodul 12 jeden der Phasenleiter paarweise mit dem Neutralleiter verbinden. Die Ansprechspannung der Varistoren 26 ist so gewählt, daß sie zwischen den bei richtiger Polung und bei falscher Polung in der Verbraucheranordnung 10 auftretenden Spannungen liegt, also beispielsweise bei etwa 320 V. Oberhalb der Ansprechspannung sinkt der ohmsche Widerstand der Varistoren 26 so stark ab, daß sie das jeweilige Leiterpaar nahezu kurzschließen. Dies führt zu einem stark erhöhten Stromfluß aus dem Drehstromnetz 14, der jedoch nicht in die Verbraucheranordnung 10 gelangt, sondern über den betreffenden Varistor 26 unmittelbar ins Netz zurückgeleitet wird und dort in der Regel zur Auslösung einer schematisch dargestellten Sicherung 28, beispielsweise einer Gebäudesicherung, führen wird. Unterhalb der Ansprechspannung ist der ohmsche Widerstand der Varistoren 26 so groß, daß kein wesentlicher Stromfluß zwischen dem jeweiligen Leiterpaar auftritt. Im obigen Beispielfall einer versehentlichen Vertauschung des Phasenleiters L3 mit dem Neutralleiter N wäre die Ansprechspannung der zwischen den Leitern L1 und N und den Leitern L2 und N liegenden Varistoren 26 überschritten, was zum "Kurzschluß" dieser Leiterpaare führen würde. Der Varistor 26 zwischen den Leitern L3 und N wäre weiterhin hochohmig; dies wäre aber kein Problem, da zwischen diesen beiden Leitern weiterhin nur die Strangspannung von etwa 230 V anliegen würde.

Das Verbindermodul 12 kann neben den Schnittstellenanschlüssen für die Phasenleiter und den Neutralleiter des Drehstromnetzes 14 auch Schnittstellenanschlüsse für eine Masseleitung aufweisen, was in Fig. 1 durch ein nicht beschaltetes Schnittstellenpaar angedeutet ist. Varistoren zwischen einer solchen Masseleitung und den übrigen Leitern werden - wenngleich nicht grundsätzlich ausgeschlossen - nicht erforderlich sein, da bei versehentlichem Anschluß eines der Phasenleiter an einen Masse-Schnittstellenanschluß des Verbindermoduls 12 ein sofortiger Masseschluß dieses Phasenleiters eintritt, der die Aktivierung der Netzsicherung 28 bewirkt.

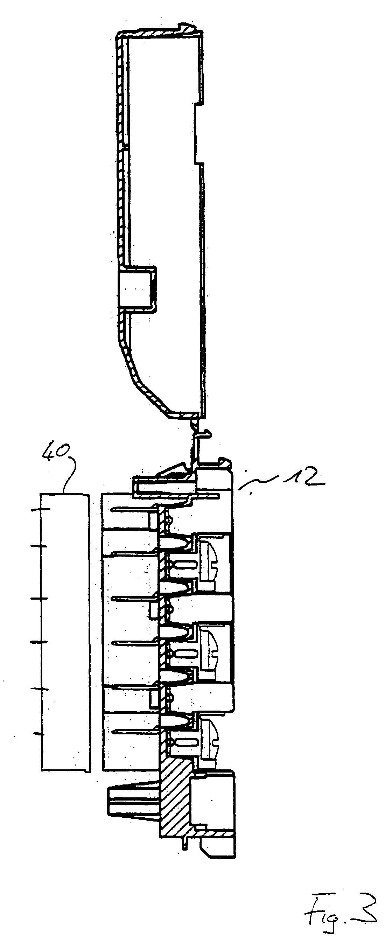

In Fig. 2 sind gleiche oder gleichwirkende Komponenten wie in Fig. 1 durch gleiche Bezugszeichen bezeichnet. Fig. 2 zeigt eine Ausgestaltung des Verbindermoduls 12 als Anschlußdose, welche in nicht näher dargestellter Weise an einem Verbraucher, etwa an der Rückwand eines Herds, montierbar ist. Die Anschlußdose 12 weist ein beispielsweise spritzgegossenes Kunststoffgehäuse 30 auf, das durch einen Deckel 32 verschließbar ist. Die nur schematisch dargestellten Kontaktelemente 20 sind in dem Gehäuse 30 untergebracht. Ein die Leiter L1, L2, L3 und N und ggf. eine Masseleitung enthaltendes Netzkabel 34 ist in nicht näher dargestellter Weise in das Gehäuse 30 einführbar und darin festklemmbar. Die Schnittstellenanschlüsse 18 sind bevorzugt als Schraubklemmen ausgeführt. Die Schnittstellenanschlüsse 16 sind bevorzugt als Steckanschlüsse ausgeführt, insbesondere derart, daß ein eine komplementäre Steckbuchsenanordnung 36 aufweisender Systemstecker 38 eines Verbrauchers auf die Schnittstellenanschlüsse 16 ansteckbar ist.

Die Varistoren 26 können in einem von der Anschlußdose 12 gesonderten Verpolungsschutzmodul 40 untergebracht sein, welches lösbar an der Anschlußdose 12 anbringbar ist, beispielsweise mittels einer auf die Steckanschlüsse 16 der Anschlußdose 12 aufsteckbaren Steckbuchsenanordnung 42. Zum Anschluß des Systemsteckers 38 des Verbrauchers wird das Verpolungsschutzmodul 40 dann eine den Steckanschlüssen 16 der Anschlußdose 12 entsprechende Steckanordnung 44 tragen, auf die der Systemstecker 38 aufsteckbar ist.

Alternativ können die Varistoren 26 in die Anschlußdose 12 integriert sein, so daß auf ein zusätzliches Bauteil in Form des Verpolungsschutzmoduls 40 verzichtet werden kann. Die Varistoren 26 können dann innerhalb des Gehäuses 30 der Anschlußdose 12 mit den Kontaktelementen 20 verlötet sein, wie in Fig. 2 gestrichelt angedeutet ist.

Es hat sich gezeigt, daß bei einer Falschpolung die Wirklei-stungsaufnahme der Varistoren 26 bis zur Aktivierung der Netzsicherung 28 erheblich sein kann und deshalb mit einer vergleichsweise starken Erwärmung der Varistoren gerechnet werden muß. Man wird daher zweckmäßigerweise auf Varistoren zurückgreifen, deren Erwärmungsverhalten keine thermischen Schäden an umliegenden Komponenten befürchten läßt. Unter Umständen wird man auch geeignete Kühlmaßnahmen für die Varistoren ergreifen, etwa durch Anbringung von Kühlkörpern an den Varistoren.

Fig. 3 zeigt ein konkretes Ausführungsbeispiel, bei dem auf der gerätezugewandten Seite einer Anschlußdose 12 das Modul 40 angesteckt wird, so daß es geräteinnenseitig die Verbindungsmimik der Anschlußdose 12 1:1 wiedergibt und gleichzeitig für die Verpolungsschutzfunktion sorgt.

Anstelle der spannungsabhängigen Widerstände (Varistoren) können auch andere elektrische Bauteile verwendet werden, deren Widerstandswert mit steigender Spannung, die an ihnen anliegt, abfällt. Beispielsweise können bidirektionale Zehnerdioden verwendet werden. Zehnerdioden reagieren allerdings wesentlich schneller auf Spannungsänderungen als Widerstände (die ein eher durchschnittsbildendes Verhalten zeigen), so daß gegebenenfalls ein Tiefpaß in Serie mit der Zehnerdiode geschaltet werden muß, um zu verhindern, daß kurzzeitige Spannungsspitzen zu einem Durchbruch der Zehnerdiode führen.

## Patentansprüche

1. Vorrichtung zur Verbindung einer mehrere Phasenleiter (L1, L2, L3) und einen Neutralleiter (N) aufweisenden mehrphasigen Wechselstromversorgung (14) mit einer elektrischen Verbraucheranordnung (10), umfassend ein Verbindermodul (12) mit einem Gehäuse (30) und mehreren von dem Gehäuse (30) aufgenommenen, zur Verbindung mit je einem der Leiter (L1, L2, L3, N) der Wechselstromversorgung (14) bestimmten Kontaktelementen (20),
**gekennzeichnet durch** eine mit dem Verbindermodul (12) zu einer Baueinheit vormontierte oder vormontierbare Verpolungsschutzanordnung (40) mit mehreren Verpolungsschutzelementen (26), welche zumindest zwischen jedes Paar eines einem der Phasenleiter (L1, L2, L3) zugeordneten Kontaktelements (20) und des dem Neutralleiter (N) zugeordneten Kontaktelements (20) geschaltet sind und bei einer kleineren zwischen den Kontaktelementen (20) des jeweiligen Paars liegenden Spannung eine höherohmige Verbindung und bei einer größeren Spannung eine niederohmigere Verbindung zwischen diesem Kontaktelementenpaar (20) bilden.

2. Einrichtung nach Anspruch 1,
**dadurch gekennzeichnet,**
**daß** die Verpolungsschutzelemente (26) von Varistoren gebildet sind.

3. Einrichtung nach Anspruch 1 oder 2,
**dadurch gekennzeichnet,**
**daß** die Verpolungsschutzelemente (26) in dem Verbindergehäuse (30) untergebracht und darin unlösbar mit den Kontaktelementen (20) verbunden sind.

4. Einrichtung nach Anspruch 1 oder 2,
**dadurch gekennzeichnet,**
**daß** die Verpolungsschutzanordnung (40) als ein von dem Verbindermodul (12) gesondert hergestelltes Verpolungsschutzmodul ausgeführt ist, welches lösbar an dem Verbindermodul (12) anbringbar ist, insbesondere mittels einer Steckverbindung (16, 42).
